# EUROPEAN PATENT APPLICATION

(11) **EP 4 383 876 A1**
(43) Date of publication of application: **12.06.2024**
(21) Application number: 21952323.0
(22) Date of filing: 05.08.2021
(51) Int. Cl.: H04W 72/04

(54) **COMMUNICATION METHOD AND APPARATUS, AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: dompatent von Kreisler Selting Werner - Partnerschaft von Patent- und Rechtsanwälten mbB
(86) International application number: PCT/CN2021/110950
(87) International publication number: WO 2023/010431

(57) **Abstract**

Disclosed in the embodiments of the present disclosure are a communication method and apparatus, and a storage medium. The method comprises: a terminal device receiving configuration information of a network device, wherein the configuration information comprises time domain information of a plurality of physical downlink control channels (PDCCHs), and M transmission configuration indicator states (TCI states), which are used for receiving the plurality of PDCCHs, with M being an integer greater than 0, and the configuration information further comprises time domain resource information of a plurality of physical downlink shared channels (PDSCHs), and N TCI states, which are used for receiving the plurality of PDSCHs, with N being an integer greater than 0; and if time domain resources occupied by at least one PDCCH and at least one PDSCH overlap with each other, determining a TCI state for receiving the PDSCH. By means of implementing the embodiments of the present disclosure, a TCI state for receiving a PDCCH can be kept consistent with a TCI state for receiving a PDSCH, thereby improving a beam-based transmission performance.

## Description

### TECHNICAL FIELD

The present disclosure relates to a communication technical field, and more particularly to a communication method, a communication apparatus and a storage medium.

### BACKGROUND

In new radio (NR), high-frequency channels attenuate quickly. In order to ensure a coverage area, transmission and reception based on beams need to be used.

Currently, for beam-based reception, a network device configures a corresponding relationship between a transmission configuration indicator (TCI) state and a reference signal (RS) for a terminal device via a radio resource control (RRC) signaling, so as to inform the user terminal device of the beam to be used when receiving.

Rel-16 discusses the transmission of physical downlink shared channels (PDSCHs) of multiple transmission reception points (multi-TRPs). The network device indicates two TCI states to transmit PDSCHs multiple times, there is a mapping relationship between the two TCI states and the time domain resources used to transmit PDSCHs multiple times. For the transmission of physical downlink control channels (PDCCHs), there is also a mapping relationship between the two TCI states and the time domain resources used to transmit the PDCCHs multiple times.

When both PDCCH and PDSCH are configured with repeated transmission, the PDCCH may overlap with the PDSCH in the time domain. At this time, the network device and the terminal device cannot maintain the consistency of the TCI state, which is a technical problem that needs to be solved urgently.

### SUMMARY

Embodiments of the present disclosure provide a communication method, a communication apparatus and a storage medium. A TCI state for receiving physical downlink shared channels (PDSCHs) is determined in case of time domain resources occupied by at least one physical downlink control channels (PDCCHs) overlapping with time domain resources occupied by the at least one PDSCH, so that the TCI state for receiving the PDCCHs is consistent with the TCI state for receiving the PDSCHs, thereby improving beam-based transmission performance.

In a first aspect, embodiments of the present disclosure provide a communication method. The method is performed by a terminal device and includes: receiving configuration information of a network device, in which the configuration information includes time domain information of a plurality of physical downlink control channels (PDCCHs) and M transmission configuration indicator (TCI) states for receiving the plurality of the PDCCHs, where M is an integer greater than 0; the configuration information further includes time domain resource information of a plurality of physical downlink shared channels (PDSCHs) and N TCI states for receiving the plurality of PDSCHs, where N is an integer greater than 0; and determining a TCI state for receiving at least one PDSCH in case of time domain resources occupied by at least one PDCCH overlapping with time domain resources occupied by the at least one PDSCH.

In the technical solution, the terminal device receives the configuration information of the network device. The configuration information includes the time domain information of the plurality of PDCCHs and M TCI states for receiving the plurality of PDCCHs, where M is an integer greater than 0; the configuration information further includes the time domain resource information of the plurality of PDSCHs and N TCI states for receiving the plurality of PDSCHs, where N is an integer greater than 0. The TCI state for receiving at least one PDSCH in determined in case of time domain resources occupied by at least one PDCCH overlapping with time domain resources occupied by the at least one PDSCH. In this way, the TCI state for receiving the PDCCH is consistent with the TCI state for receiving the PDSCH, thereby improving the beam-based transmission performance.

In some embodiments, the time domain resources occupied by the at least one PDCCH overlapping with the time domain resources occupied by the at least one PDSCH includes: time domain resources occupied by an i^{th} PDCCH in the plurality of the PDCCHs overlapping with time domain resources occupied by an h^{th} PDSCH in the plurality of PDSCHs, where i is an integer greater than 0, and h is an integer greater than 0.

In some embodiments, the time domain resources occupied by the i^{th} PDCCH in the plurality of PDCCHs overlapping with time domain resources occupied by the h^{th} PDSCH in the plurality of PDSCHs includes at least one of: a transmission mode of the plurality of PDCCHs being an intra-slot time division multiplexing (TDM) scheme, and a transmission mode of the plurality of PDSCHs being the intra-slot TDM scheme; the transmission mode of the plurality of PDCCHs being the intra-slot TDM scheme, and the transmission mode of the plurality of PDSCHs being an inter-slot TDM scheme; the transmission mode of the plurality of PDCCHs being the inter-slot TDM scheme, and the transmission mode of the plurality of PDSCHs being the inter-slot TDM scheme; the transmission mode of the plurality of PDCCHs being a single frequency network (SFN) or a frequency division multiplexing (FDM) scheme, and the transmission mode of the plurality of PDSCHs being the SFN, a space division multiplexing (SDM) scheme or the FDM scheme; or the transmission mode of the plurality of PDCCHs being the SFN or the FDM scheme, and the transmission mode of the plurality of PDSCHs being the TDM scheme.

In some embodiments, determining the TCI state for receiving the at least one PDSCH includes: a TCI state corresponding to the i^{th} PDCCH being used for the h^{th} PDSCH.

In some embodiments, the M TCI states are identical with the N TCI states.

In some embodiments, a value of N is 2, the plurality of PDSCHs include two PDSCHs, and the PDSCH other than the h^{th} PDSCH uses a TCI state different from the TCI state corresponding to the i^{th} PDCCH in the N TCI states.

In some embodiments, a value of N is 2, and the plurality of PDSCHs include L PDSCHs, where L is an even number greater than 2. The two TCI states for receiving the L PDSCHs is determined according to a mapping rule of the two TCI states. The mapping rule of the two TCI states is a cyclic mapping or a sequential mapping.

In some embodiments, the method further includes: in case that the mapping rule of the N TCI states is the cyclic mapping, the TCI state corresponding to the i^{th} PDCCH being used for odd-numbered PDSCHs, and a TCI state different from the TCI state corresponding to the i^{th} PDCCH in the N TCI states being used for even-numbered PDSCHs, in case that h is an odd number; or the TCI state corresponding to the i^{th} PDCCH being used for even-numbered PDSCHs, and the TCI state different from the TCI state corresponding to the i^{th} PDCCH in the N TCI states being used for odd-numbered PDSCHs, in case that h is an even number.

In some embodiments, the method further includes: in case that the mapping rule of the N TCI state is the sequential mapping, the TCI state corresponding to the i^{th} PDCCH being used for a (4j+1)^{th} PDSCH and a (4j+2)^{th} PDSCH, and a TCI state different from the TCI state corresponding to the i^{th} PDCCH in the N TCI states being used for a (4j+3)^{th} PDSCH and a (4j+4)^{th} PDSCH, where j is an integer greater than or equal to 0; or the TCI state corresponding to the i^{th} PDCCH being used for a first L/2 PDSCHs, and a TCI state different from the TCI state corresponding to the i^{th} PDCCH in the N TCI states being used for a last L/2 PDSCHs.

In some embodiments, the M TCI states are not identical with the N TCI states.

In some embodiments, a value of N is 2, the plurality of PDSCHs include two PDSCHs. A first PDSCH uses a first TCI state in the N TCI states, and a second PDSCH uses a second TCI state in the N TCI states; or the first PDSCH uses a second TCI state in the N TCI states, and the second PDSCH uses the first TCI state in the N TCI states.

In some embodiments a value of N is 2, and the plurality of PDSCHs include L PDSCHs, where L is an even number greater than 2. The two TCI states for receiving the L PDSCHs are determined according to a mapping rule of a cyclic mapping or a sequential mapping.

In some embodiments, the method further includes a first TCI state in the N TCI states being used for odd-numbered PDSCHs, and a second TCI state in the N TCI states being used for even-numbered PDSCHs, according to the mapping rule of the cyclic mapping; in which PDSCHs occupying time domain resources not overlapping with the time domain resources occupied by the first PDSCH remain unchanged or are postponed in sequence; or a second TCI state in the N TCI states being used for odd-numbered PDSCHs, and a first TCI state in the N TCI states being used for even-numbered PDSCHs; in which PDSCHs occupying the time domain resources not overlapping with the time domain resources occupied by the first PDSCH remain unchanged or are postponed in sequence.

In some embodiments, the method further includes a first TCI state be used for a (4k+1)^{th} PDSCH and a (4k+2)^{th} PDSCH, and a second TCI state being used for a (4k+3)^{th} PDSCH and a (4k+4)^{th} PDSCH, according to the mapping rule of the sequential mapping, where k is an integer greater than or equal to 0; in which PDSCHs occupying the time domain resources not overlapping with the time domain resources occupied by the first PDSCH remain unchanged or are postponed in sequence; or the TCI state corresponding to the first PDCCH being used for a first L/2 PDSCHs, and a TCI state different from the TCI state corresponding to the second PDCCH in the N TCI states being used for a last L/2 PDSCHs; in which PDSCHs occupying the time domain resources not overlapping with the time domain resources occupied by the first PDSCH remain unchanged or are postponed in sequence.

In some embodiments, determining a TCI state for receiving at least one PDSCH in case of time domain resources occupied by at least one PDCCH overlapping with time domain resources occupied by the at least one PDSCH includes: the terminal device not expecting that time domain resources occupied by an s^{th} PDCCH and an (s+1)^{th} PDCCH in the plurality of PDCCHs overlap with the time domain resources occupied by one of the plurality of PDSCHs, where s is an integer greater than 0.

In a second aspect, embodiments of the present disclosure provide a communication method. The method is performed by a network device and includes: sending configuration information of a terminal device, in which the configuration information includes time domain information of a plurality of PDCCHs and M TCI states for sending the plurality of PDCCHs, where M is an integer greater than 0; the configuration information also includes time domain resource information of a plurality of PDSCHs and N TCI states for sending the plurality of PDSCHs, where N is an integer greater than 0; and determining a TCI state for sending at least one PDSCH in case of time domain resources occupied by at least one PDCCH overlapping with time domain resources occupied by the at least one PDSCH.

In some embodiments, the time domain resources occupied by the at least one PDCCH overlapping with the time domain resources occupied by the at least one PDSCH, includes: time domain resources occupied by an i^{th} PDCCH in the plurality of the PDCCHs overlapping with time domain resources occupied by an h^{th} PDSCH in the plurality of PDSCHs, where i is an integer greater than 0, and h is an integer greater than 0.

In some embodiments, the time domain resources occupied by the i^{th} PDCCH in the plurality of PDCCHs overlapping with time domain resources occupied by the h^{th} PDSCH in the plurality of PDSCHs includes at least one of: a transmission mode of the plurality of PDCCHs being an intra-slot time division multiplexing (TDM) scheme, and a transmission mode of the plurality of PDSCHs being the intra-slot TDM scheme; the transmission mode of the plurality of PDCCHs being the intra-slot TDM scheme, and the transmission mode of the plurality of PDSCHs being an inter-slot TDM scheme; the transmission mode of the plurality of PDCCHs being the inter-slot TDM scheme, and the transmission mode of the plurality of PDSCHs being the inter-slot TDM scheme; the transmission mode of the plurality of PDCCHs being a single frequency network (SFN) or a frequency division multiplexing (FDM) scheme, and the transmission mode of the plurality of PDSCHs being the SFN, a space division multiplexing (SDM) scheme or the FDM scheme; or the transmission mode of the plurality of PDCCHs being the SFN or the FDM scheme, and the transmission mode of the plurality of PDSCHs being the TDM scheme.

In some embodiments, determining the TCI state for sending the at least one PDSCH includes: the TCI state corresponding to the i^{th} PDCCH being used for the h^{th} PDSCH.

In some embodiments, the M TCI states are identical with the N TCI states.

In some embodiments, a value of N is 2, the plurality of PDSCHs include two PDSCHs, and an PDSCH other than the h^{th} PDSCH uses a TCI state different from the TCI state corresponding to the i^{th} PDCCH in the N TCI states.

In some embodiments, a value of N is 2, and the plurality of PDSCHs include L PDSCHs, where L is an even number greater than 2. The two TCI states for sending the L PDSCH is determined according to a mapping rule of the two TCI states. The mapping rule of the two TCI states is a cyclic mapping or a sequential mapping.

In some embodiments, the method further includes: in case that the mapping rule of the N TCI states is the cyclic mapping, the TCI state corresponding to the i^{th} PDCCH being used for odd-numbered PDSCHs, and a TCI state different from the TCI state corresponding to the i^{th} PDCCH in the N TCI states being used for even-numbered PDSCHs, in case that h is an odd number; or the TCI state corresponding to the i^{th} PDCCH being used for even-numbered PDSCHs, and the TCI state different from the TCI state corresponding to the i^{th} PDCCH in the N TCI states being used for odd-numbered PDSCHs, in case that h is an even number.

In some embodiments, the method further includes: in case that the mapping rule of the N TCI state is the sequential mapping, the TCI state corresponding to the i^{th} PDCCH being used for a (4j+1)^{th} PDSCH and a (4j+2)^{th} PDSCH, and a TCI state different from the TCI state corresponding to the i^{th} PDCCH in the N TCI states being used for a (4j+3)^{th} PDSCH and a (4j+4)^{th} PDSCH, where j is an integer greater than or equal to 0; or the TCI state corresponding to the i^{th} PDCCH being used for a first L/2 PDSCHs, and a TCI state different from the TCI state corresponding to the i^{th} PDCCH in the N TCI states being used for a last L/2 PDSCHs.

In some embodiments, the M TCI states are not identical with the N TCI states.

In some embodiments, a value of N is 2, the plurality of PDSCHs include two PDSCHs; a first PDSCH uses a first TCI state in the N TCI states, and a second PDSCH uses a second TCI state in the N TCI states; or the first PDSCH uses a second TCI state in the N TCI states, and the second PDSCH uses the first TCI state in the N TCI states.

In some embodiments, a value of N is 2, and the plurality of PDSCHs include L PDSCHs, where L is an even number greater than 2; the two TCI states for sending the L PDSCHs are determined according to a mapping rule of a cyclic mapping or a sequential mapping.

In some embodiments, the method further includes: a first TCI state in the N TCI states being used for odd-numbered PDSCHs, and a second TCI state in the N TCI states being used for even-numbered PDSCHs, according to the mapping rule of the cyclic mapping; in which PDSCHs occupying time domain resources not overlapping with the time domain resources occupied by the first PDSCH remain unchanged or are postponed in sequence; or a second TCI state in the N TCI states being used for odd-numbered PDSCHs, and a first TCI state in the N TCI states being used for even-numbered PDSCHs; in which PDSCHs occupying the time domain resources not overlapping with the time domain resources occupied by the first PDSCH remain unchanged or are postponed in sequence.

In some embodiments, the method further includes: a first TCI state being used for a (4k+1)^{th} PDSCH and a (4k+2)^{th} PDSCH, and a second TCI state being used for a (4k+3)^{th} PDSCH and a (4k+4)^{th} PDSCH, according to the mapping rule of the sequential mapping, where k is an integer greater than or equal to 0; in which PDSCHs occupying the time domain resources not overlapping with the time domain resources occupied by the first PDSCH remain unchanged or are postponed in sequence; or the TCI state corresponding to the first PDCCH being used for a first L/2 PDSCHs, and a TCI state different from the TCI state corresponding to the second PDCCH in the N TCI states being used for a last L/2 PDSCHs; in which PDSCHs occupying the time domain resources not overlapping with the time domain resources occupied by the first PDSCH remain unchanged or are postponed in sequence.

In some embodiments, determining a TCI state for sending at least one PDSCH in case of time domain resources occupied by at least one PDCCH overlapping with time domain resources occupied by the at least one PDSCH includes: the terminal device not expecting that the time domain resources occupied by an s^{th} PDCCH and an (s+1)^{th} PDCCH in the plurality of PDCCHs overlap with the time domain resources occupied by one of the plurality of PDSCHs, where s is an integer greater than 0.

In a third aspect, embodiments of the present disclosure provide a communication apparatus. The communication apparatus has some or all of functions of the terminal device in the method described in the first aspect. For example, the functions of the communication apparatus may have some or all of the functions in embodiments disclosed herein, or may have the functions of implementing any one of embodiments disclosed herein separately. The functions described may be implemented through hardware or by executing corresponding software through hardware. The hardware or software includes one or more units or modules corresponding to the above functions.

In some embodiments, a structure of the communication apparatus includes a transceiver module and a processing module. The processing module is configured to support the communication apparatus in executing the corresponding functions in the above method. The transceiver module is configured to support communication between communication apparatus and other devices. The communication apparatus may also include a storage module for coupling with the transceiver module and the processing module, which stores necessary computer programs and data for the communication apparatus.

As an example, the processing module may be a processor, the transceiver module may be a transceiver or a communication interface, and the storage module may be a memory.

In some embodiments, the communication apparatus includes a transceiver module configured to receive configuration information of a network device, in which the configuration information includes time domain information of a plurality of PDCCHs and M TCI states for receiving the plurality of the PDCCHs, where M is an integer greater than 0; the configuration information further includes time domain resource information of a plurality of PDSCHs and N TCI states for receiving the plurality of PDSCHs, where N is an integer greater than 0; and a processing module configured to determine a TCI state for receiving at least one PDSCH in case of time domain resources occupied by at least one PDCCH overlapping with time domain resources occupied by the at least one PDSCH.

In a fourth aspect, embodiments of the present disclosure provide a communication apparatus. The communication apparatus has some or all of functions of the terminal device in the method described in the second aspect. For example, the functions of the communication apparatus may have some or all of the functions in embodiments disclosed herein, or may have the functions of implementing any one of embodiments disclosed herein separately. The functions described may be implemented through hardware or by executing corresponding software through hardware. The hardware or software includes one or more units or modules corresponding to the above functions.

In some embodiments, a structure of the communication apparatus includes a transceiver module and a processing module. The processing module is configured to support the communication apparatus in executing the corresponding functions in the above method. The transceiver module is configured to support communication between communication apparatus and other devices. The communication apparatus may also include a storage module for coupling with the transceiver module and the processing module, which stores necessary computer programs and data for the communication apparatus.

In some embodiments, the communication apparatus includes a transceiver module configured to send configuration information of a terminal device, in which the configuration information includes time domain information of a plurality of PDCCHs and M TCI states for receiving the plurality of the PDCCHs, where M is an integer greater than 0; the configuration information further includes time domain resource information of a plurality of PDSCHs and N TCI states for receiving the plurality of PDSCHs, where N is an integer greater than 0; and a processing module configured to determine a TCI state for receiving at least one PDSCH in case of time domain resources occupied by at least one PDCCH overlapping with time domain resources occupied by the at least one PDSCH.

In a fifth aspect, embodiments of the present disclosure provides a communication device. The communication device includes a processor. When the processor calls a computer program in a memory, the processor executes the method described in the first aspect.

In a sixth aspect, embodiments of the present disclosure provides a communication device. The communication device includes a processor. When the processor calls a computer program in a memory, the processor executes the method described in the second aspect.

In a seventh aspect, embodiments of the present disclosure provides a communication device. The communication device includes a processor and a memory, and a computer program is stored in the memory. The processor executes the computer program stored in the memory, causing the communication device to execute the method described in the first aspect above.

In an eighth aspect, embodiments of the present disclosure provides a communication device. The communication device includes a processor and a memory, and a computer program is stored in the memory. The processor executes the computer program stored in the memory, causing the communication device to execute the method described in the second aspect above.

In a ninth aspect, embodiments of the present disclosure provides a communication device. The device includes a processor and an interface circuit. The interface circuit is configured to receive code instructions and transmit the code instructions to the processor. The processor is configured to run the code instructions to cause the device performs the method described in the first aspect above.

In a tenth aspect, embodiments of the present disclosure provides a communication device. The device includes a processor and an interface circuit. The interface circuit is configured to receive code instructions and transmit the code instructions to the processor. The processor is configured to run the code instructions to cause the device performs the method described in the second aspect above.

In an eleventh aspect, embodiments of the present disclosure provides a communication system. The system includes the communication apparatus described in the third aspect and the communication apparatus described in the fourth aspect, or the system includes the communication device described in the fifth aspect and the communication device according to the sixth aspect, or the system includes the communication device according to the seventh aspect and the communication device according to the eighth aspect, or the system includes the communication device according to the ninth aspect and the communication device according to the tenth aspect.

In a twelfth aspect, embodiments of the present disclosure provide a readable storage medium for storing instructions used by the above-mentioned network device. When the instructions are executed, the network device is caused to perform the method described in the first aspect.

In a thirteenth aspect, embodiments of the present disclosure provide a readable storage medium for storing instructions used by the above-mentioned network device. When the instructions are executed, the network device is caused to perform the method described in the second aspect.

In a fourteenth aspect, the present disclosure also provides a computer program product including a computer program that, when run on a computer, causes the computer to execute the method described in the third aspect.

In a fifteenth aspect, the present disclosure also provides a computer program product including a computer program that, when run on a computer, causes the computer to execute the method described in the second aspect.

In a sixth aspect, the present disclosure provides a chip system. The chip system includes at least one processor and an interface for supporting a network device to implement the functions involved in the first aspect, for example, determining or processing at least one of data and information involved in the above method. In a possible design, the chip system further includes a memory, and the memory is configured to store necessary computer programs and data for the network device. The chip system may be composed of chips, or may include chips and other discrete devices.

In a seventeenth aspect, the present disclosure provides a chip system. The chip system includes at least one processor and an interface for supporting a network device to implement the functions involved in the second aspect, for example, determining or processing at least one of data and information involved in the above method. In a possible design, the chip system further includes a memory, and the memory is configured to store necessary computer programs and data for the network device. The chip system may be composed of chips, or may include chips and other discrete devices.

In an eighteenth aspect, the present disclosure provides a computer program that, when run on a computer, causes the computer to perform the method described in the first aspect.

In a nineteenth aspect, the present disclosure provides a computer program that, when run on a computer, causes the computer to perform the method described in the second aspect.

### BRIEF DESCRIPTION OF THE DRAWINGS

In order to more clearly illustrate the technical solutions in embodiments of the disclosure or the background technology, the drawings used in embodiments or the background technology of the present disclosure will be described below.
FIG. 1 is an architectural diagram of a communication system provided by an embodiment of the present disclosure;
FIG. 2 is a flow chart of a communication method provided by an embodiment of the present disclosure;
FIG. 3 is a flow chart of another communication method provided by an embodiment of the present disclosure;
FIG. 4 is a schematic diagram of a communication apparatus provided by an embodiment of the present disclosure;
FIG. 5 is a schematic diagram of another communication apparatus provided by an embodiment of the present disclosure;
FIG. 6 is a schematic diagram of a chip provided by an embodiment of the present disclosure.

### DETAILED DESCRIPTION

The technical solutions provided by embodiments of the present disclosure may be applied to various communication systems, for example, including, but are not limited to a LTE systems, a fifth-generation (5G) system, a NR system, and a future evolution systems or multiple communication convergence system. The 5G system may be a non-standalone (NSA) 5G system or a standalone (SA) 5G system.

In order to better understand a communication method disclosed in embodiments of the present disclosure, the communication system to which embodiments of the present disclosure is applicable is first described below.

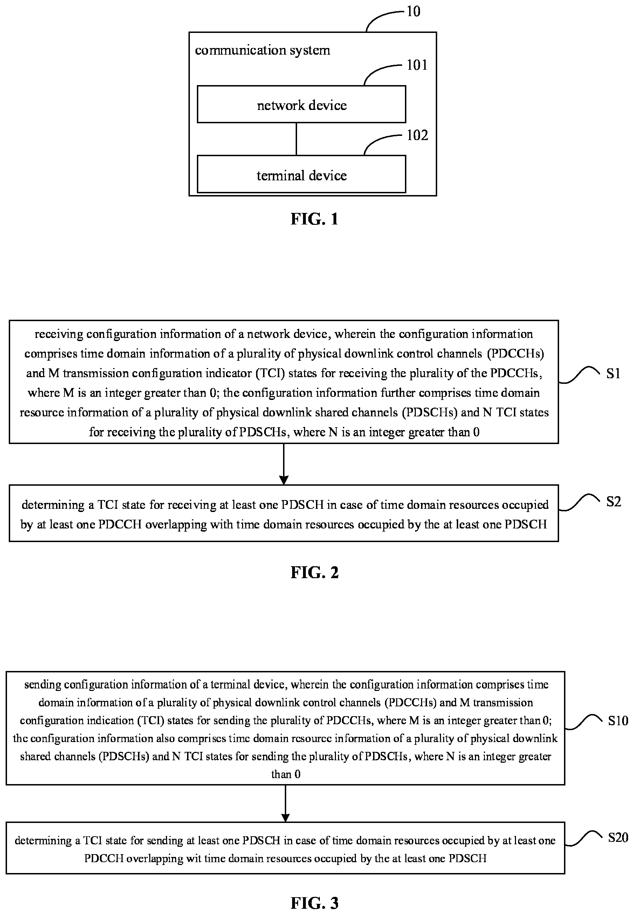

As shown in FIG. 1, which is a schematic diagram of a communication system 10 provided by an embodiment of the present disclosure. The communication system 10 may include, but is not limited to one network device and one terminal device. The number and form of devices shown in FIG. 1 are only for examples and do not constitute a limitation on embodiments of the present disclosure. In actual applications, two or more network devices and two terminal device may be included. The communication system 10 shown in FIG. 1 includes a network device 101 and a terminal device 102 as an example.

The network device 101 in embodiments of the present disclosure is an entity on a network side that is configured to transmit or receive signals. The network device 101 may be a device deployed in a radio access network (RAN) to provide wireless communication functions for the terminal device, such as, a TRP, a base station, various forms of control nodes (e.g., network controller, wireless controller (e.g., a wireless controller in a cloud radio access network (CRAM) scenario), etc. Specifically, the network device 101 may be various forms of macro base stations, micro base stations (also called small stations), relay stations, access points (AP), etc., or may also be an antenna panel of the base station. The control node may connect to a plurality of base stations and configure resources for the plurality of terminal devices covered by the plurality of base stations. In systems using different wireless access technologies, the names of devices with base station functions may be different. For example, in the LTE system, the base station may be called an evolved NodeB (eNB or eNodeB), and in the 5G system or NR system, the base station may be called a next generation node base station (gNB). The specific name of the base station is not limited in the present disclosure. The network device 101 may also be a network device 101 in a future evolved public land mobile network (PLMN), etc.

In some deployments, the network device 101 may include a centralized unit (CU) and a distributed unit (DU). The network device 101 may also include an active antenna unit (AAU). The CU implements part of the functions of the network device 101, and the DU implements part of the functions of the network device 101. For example, the CU is responsible for processing non-real-time protocols and services, and implementing radio resource control (RRC) and packet data convergence protocol (PDCP) layer functions. DU is responsible for processing physical layer protocols and real-time services, and implementing functions of radio link control (RLC), media access control (MAC) and physical (PHY) layers. AAU implements some physical layer processing functions, radio frequency processing and active antenna related functions. Since information of the RRC layer will eventually become information of the PHY layer, or be transformed from information of the PHY layer. Under this architecture, a high-level signaling, such as a RRC layer signaling or a PDCP layer signaling, may be considered to be sent by DU, or sent by DU+AAU. It is understood that the network device 101 may be a device including one or more of a CU node, a DU node, and an AAU node. In addition, the CU may be divided into the network device 101 in the RAN, or the CU may be divided into the network device 101 in the core network (core network, referred to as CN), which is not limited here.

The terminal device 102 in embodiments of the present disclosure is an entity on a user side that is configured to receive signals, or send signals, or receive signals and send signals. The terminal device 102 is configured to provide one or more of voice services and data connectivity services to users. The terminal device 102 may also be referred to as a user equipment (UE), a terminal, an access terminal, a user unit, a user station, a mobile station, a remote station, a remote terminal, a mobile device, a user terminal, a wireless communication device, a user agent or a user device. The terminal device 102 may be a mobile station (MS), a subscriber unit, a drone, an internet of things (IoT) device, or a station (ST) in a wireless local area network (WLAN), a cellular phone, a smart phone, a cordless phone, a wireless data card, a tablet computer, a session initiation protocol (SIP) phone, a wireless local loop (WLL) station, a personal digital assistant (PDA) device, a laptop computer, a machine type communication (MTC) terminal, a handheld device with wireless communication functions, a computing device or other processing devices, vehicle-mounted devices, wearable devices (also known as wearable smart devices) connected to wireless modems. The terminal device 102 may also be a terminal device in a next generation communication system, for example, a terminal device in a 5G system or a terminal device in a future evolved PLMN, a terminal device in an NR system, etc.

The technical solution provided by embodiments of the present disclosure may be applied to various communication scenarios. For example, machine to machine (M2M), macro and micro communications, enhanced mobile broadband (eMBB), ultra-reliable & low latency communication (URLLC), internet of vehicles, massive machine type communication (mMTC), or other scenarios.

Network architectures and business scenarios described in embodiments of the present disclosure are for a purpose of explaining the technical solution of embodiments of the present disclosure more clearly, and do not constitute a limitation on the technical solutions provided by embodiments of the present disclosure. Those skilled in the art know that with the evolution of the network architecture and the emergence of the new business scenarios, the technical solution provided by embodiments of the present disclosure are also applicable to similar technical problems.

The communication method and apparatus provided by the present disclosure will be introduced in detail below with reference to the accompanying drawings.

In NR, especially when the communication frequency band is in frequency range 2 (above 6GHz), since the high-frequency channel attenuates quickly, in order to ensure coverage, beam-based transmission and reception need to be used. Currently, for beam-based reception, the network device indicates a transmission configuration indicator (TCI,) state of Quasi Co-location (QCL) type D via a signaling to inform the terminal device with the beam needed to be used when receiving.

Rel-16 discusses the transmission of PDSCHs for multiple transmission and reception points (multi-TRPs). The network device indicates two TCI states for transmitting PDSCH multiple times, and there is a mapping relationship between two TCI states and resources for transmitting PDSCHs multiple times.

When a transmission mode of PDSCHs is a time division multiplexing (TDM) scheme, the mapping relationship between the two TCI states and the resources for transmitting PDSCHs multiple times may be as follows.

When the transmission mode of PDSCHs is an intra-slot TDM scheme, the PDSCH is only transmitted twice. A first TCI state is used for PDSCHs in a front position in the time domain, and a second TCI state is used for PDSCHs in a back position in the time domain.

When the transmission mode of PDSCHs is an inter-slot TDM scheme, the PDSCH is only transmitted twice. The PDSCH in the front position in the time domain uses the first TCI state, and the PDSCH in the back position in the time domain uses the second TCI state. If the number of PDSCH transmissions exceeds two, there are two manner, i.e., a cyclic mapping and a sequential mapping.

In the cyclic mapping, a first PDSCH in the time domain position uses the first TCI state, and a second PDSCH in the time domain position uses the second TCI state. A third PDSCH in the time domain position uses the first TCI state, and a fourth PDSCH in the time domain position uses the second TCI state, and so on.

In the sequential mapping, the first PDSCH and the second PDSCH in the time domain position use the first TCI state, the third PDSCH and the fourth PDSCH in the time domain position use the second TCI state, a fifth PDSCH and a sixth PDSCH in the time domain position use the first TCI state, and a seventh PDSCH and an eighth PDSCH in the time domain use the second TCI state, and so on.

For the transmission of the PDCCH, when the transmission mode of the PDCCH also uses a TDM transmission mode, a mapping mode of the plurality of PDCCHs with two TCI states may be the same as a mapping mode of the plurality of PDSCHs with two TCI states. For example, the first PDCCH in the time domain position uses the first TCI state, the second PDCCH in the time domain position uses the second TCI state, and so on.

For the network device to indicate that two TCI states are used to transmit PDSCHs multiple times, there is a mapping relationship between the two TCI states and the time domain resources for transmitting the PDSCHs multiple times. For the transmission of PDCCHs, there is also a mapping relationship between the two TCI states and the time domain resources for transmitting the PDCCHs multiple times. When both PDCCHs and PDSCHs are configured with repeated transmission, the PDCCH may overlap with the PDSCH in the time domain. If the time domains overlap, the TCI state of PDCCHs is different form the TCI state of PDSCHs according to a previous mapping relationship, and if there are no unified rules in the network device and the terminal device, a unified TCI state cannot be kept, which is a technical problem that needs to be solved urgently.

Based on this, embodiments of the present disclosure provide a communication method, a communication apparatus and a storage medium, which are capable of determining the TCI state of each PDSCH when the PDCCHs overlap with the PDSCHs in the time domain, so that the network device and the terminal device maintain the consistency of the TCI state, thereby improving beam-based transmission performance.

As shown in FIG. 2, which is a flow chart of a communication method provided by an embodiment of the present disclosure.

As shown in FIG. 2, the method is performed by a terminal device. The method may include, but is not limited to the following steps.

In step S 1, configuration information of a network device is received. The configuration information includes time domain information of a plurality of PDCCHs and M TCI states for receiving the plurality of the PDCCHs, where M is an integer greater than 0. The configuration information further includes time domain resource information of a plurality of PDSCHs and N TCI states for receiving the plurality of PDSCHs, where N is an integer greater than 0.

In step S2, a TCI state for receiving at least one PDSCH is determined in case of time domain resources occupied by at least one PDCCH overlapping with time domain resources occupied by the at least one PDSCH.

The time domain resources occupied by at least one PDCCH overlapping with time domain resources occupied by the at least one PDSCH includes: the time domain resources occupied by one PDCCH overlapping with the time domain resources occupied by one PDSCH; the time domain resources occupied by one PDCCH overlapping with the time domain resources occupied by the plurality of PDSCHs; the time domain resources occupied by the plurality of PDCCHs overlapping with the time domain resources occupied by one PDSCH; or the time domain resources occupied by the plurality of PDCCHs overlapping with the time domain resources occupied by the plurality of PDSCHs, etc.; where the plurality is two or more.

It is understood that in case of the time domain resources occupied by at least one PDCCH overlapping with the time domain resources occupied by at least one PDSCH, the terminal device may need to use two TCI states to receive the same PDSCH, and the time for switching the TCI states may cause reception interruption, or the terminal device may not be able to support reception using more than two TCI states, thus affecting beam-based transmission performance.

In embodiments of the present disclosure, when the time domain resources occupied by at least one PDCCH overlap with the time domain resources occupied by at least one PDSCH, the TCI state for receiving the PDSCHs is determined, so that the TCI state of the network device sending the PDSCH remains consistent with the TCI state of the terminal device receiving the PDSCH, thereby improving beam-based transmission performance.

By implementing embodiments of the present disclosure, the terminal device receives the configuration information of the network device. The configuration information includes the time domain information of the plurality of PDCCHs and M TCI states for receiving the plurality of PDCCHs, where M is an integer greater than 0. The configuration information also includes the time domain resource information of the plurality of PDSCHs and N TCI states for receiving the plurality of PDSCHs, where N is an integer greater than 0. In case of the time domain resources occupied by at least one PDCCH overlapping with the time domain resources occupied by at least one PDSCH, the TCI state for receiving the PDSCH is determined. In this way, the TCI state for receiving the PDCCH may be consistent with the TCI state for receiving the PDSCH, thereby improving beam-based transmission performance.

In some embodiments, the time domain resources occupied by at least one PDCCH overlapping with the time domain resources occupied by at least one PDSCH includes: the time domain resources occupied by an i^{th} PDCCH in the plurality of the PDCCHs overlapping with the time domain resources occupied by an h^{th} PDSCH in the plurality of PDSCHs, where i is an integer greater than 0, and h is an integer greater than 0.

In an illustrative embodiment, when i is 1 and h is 1, the time domain resources occupied by the first PDCCH in the plurality of PDCCHs overlap with the time domain resources occupied by the first PDSCH in the plurality of PDSCHs.

In another illustrative embodiment, when i is 2 and h is 1, the time domain resources occupied by the second PDCCH in the plurality of PDCCHs overlap with the time domain resources occupied by the first PDSCH in the plurality of PDSCHs.

In some embodiments, the time domain resources occupied by the i^{th} PDCCH in the plurality of PDCCHs overlapping with the time domain resources occupied by the h^{th} PDSCH in the plurality PDSCHs includes: a transmission mode of the plurality of PDCCHs being an intra-slot time division multiplexing (TDM) scheme, and a transmission mode of the plurality of PDSCHs being the intra-slot TDM scheme; the transmission mode of the plurality of PDCCHs being the intra-slot TDM scheme, and the transmission mode of the plurality of PDSCHs being an inter-slot TDM scheme; the transmission mode of the plurality of PDCCHs being the inter-slot TDM scheme, and the transmission mode of the plurality of PDSCHs being the inter-slot TDM scheme; the transmission mode of the plurality of PDCCHs being a single frequency network (SFN) or a frequency division multiplexing (FDM) scheme, and the transmission mode of the plurality of PDSCHs being the SFN, a space division multiplexing (SDM) scheme or the FDM scheme; or the transmission mode of the plurality of PDCCHs being the SFN or the FDM scheme, and the transmission mode of the plurality of PDSCHs being the TDM scheme.

The time domain resources occupied by the i^{th} PDCCH in the plurality of PDCCHs overlapping with the time domain resources occupied by the h^{th} PDSCH in the plurality of PDSCHs, includes: the plurality of PDCCHs being two PDCCHs, and i is an integer greater than 0 and less than or equal to 2; the plurality of PDSCHs being two PDSCHs, h is an integer greater than 0 and less than or equal to 2; or the plurality of PDSCHs may be more than two.

In an illustrative embodiment, the plurality of PDCCHs are two PDCCHs, and the plurality of PDSCHs are two PDSCHs.

The transmission mode of the two PDCCHs is the intra-slot TDM scheme, and the transmission mode of the two PDSCHs is the intra-slot TDM scheme; or the transmission mode of the two PDCCHs is the intra-slot TDM scheme, and the transmission mode of the two PDSCHs is the inter-slot TDM scheme; or the transmission mode of the two PDCCHs is the inter-slot TDM scheme, and the transmission mode of the two PDSCHs is the inter-slot TDM scheme; or the transmission mode of two PDCCH is the SFN or the FDM scheme, and the transmission mode of two PDSCHs is the SFN, the SDM or the FDM scheme; or the transmission mode of the two PDCCHs is the SFN or the FDM scheme, and the transmission mode of the two PDSCH is the TDM scheme.

In some embodiments, determining the TCI state for receiving the PDSCH includes: the TCI state corresponding to the i^{th} PDCCH being used for the h^{th} PDSCH.

In embodiments of the present disclosure, when the time domain resources occupied by the i^{th} PDCCH in the plurality of PDCCHs overlap with the time domain resources occupied by the h^{th} PDSCH in the plurality of PDSCHs, the h^{th} PDSCH uses the TCI state corresponding to the i^{th} PDCCH, where i is an integer greater than 0, and h is an integer greater than 0. In this way, the TCI state of the network device for sending the PDSCH may be consistent with the TCI state of the terminal device for receiving the PDSCH, thereby improving beam-based transmission performance.

In some embodiments, the M TCI states are identical with the N TCI states. For example, PDCCH# 1 needs to use a first TCI state, PDCCH#2 needs to use a second TCI state, PDSCH# 1 needs to use a third TCI state, and PDSCH#2 needs to use a fourth TCI state. Unified TCI state means that the first TCI state is the same as the third TCI state, and the second TCI state is the same as the fourth TCI state; or the first TCI state is the same as the fourth TCI state, and the second TCI state is the same as the third TCI state. That is to say, PDCCH#1 and PDSCH#1 use the same TCI state, PDCCH#2 and PDSCH#2 use the same TCI state; or PDCCH#1 and PDSCH#2 use the same TCI state, PDCCH#2 and PDSCH# 1 uses the same TCI state. The above situations may all be called "M TCI states and N TCI states being identical with the N TCI states".

It is understood that in the M TCI states of the plurality of PDCCHs and the N TCI states of the plurality of PDSCHs, the M TCI states are identical with the N TCI states, so that the TCI states for receiving the PDCCH are identical with, and remain consistent with the TCI states for receiving the PDSCH.

In some embodiments, a value of N is 2, the plurality of PDSCHs include two PDSCHs, and the PDSCH other than the h^{th} PDSCH uses a TCI state different from the TCI state corresponding to the i^{th} PDCCH in the N TCI states.

In embodiments of the present disclosure, when the time domain resources occupied by the i^{th} PDCCH in the plurality of PDCCHs overlap with the time domain resources occupied by the h^{th} PDSCH in two PDSCHs, PDSCHs other than the h^{th} PDSCH use the TCI state different from the TCI state corresponding to the i^{th} PDCCH in the two TCI states.

In case that h is 1, the second PDSCH uses a TCI state different from the TCI state corresponding to the i^{th} PDCCH in the two TCI states. Therefore, compared with the previous method, a corresponding relationship between the PDCCH and the TCI state occurs an opposite change.

For example, the plurality of PDCCHs include 2 PDCCHs, the first PDCCH uses TCI state#1, and the second PDCCH uses TCI state#2; the plurality of PDSCHs include 2 PDSCHs, and the first PDSCH uses TCI state#1, and the second PDSCH uses TCI state#2 according to a traditional mapping relationship. However, since the second (i.e., h=2) PDCCH overlaps with the first (i.e., i=1) PDSCH in the time domain, based on the present disclosure, the first PDSCH needs to use the same TCI state#2 as the second PDCCH, and the second PDSCH uses TCI state #1.

In some embodiments, a value of N is 2, and the plurality of PDSCHs include L PDSCHs, where L is an even number greater than 2. The TCI state for receiving the PDSCH is determined according to the mapping rule of the TCI state. The mapping rule of the TCI state is a cyclic mapping or a sequential mapping.

In embodiments of the present disclosure, in case of the time domain resources occupied by the i^{th} PDCCH in the plurality of PDCCHs overlapping with the time domain resources occupied by the h^{th} PDSCH in the L PDSCHs, where i is an integer greater than 0, and h is an integer greater than 0, and the value of N being 2, the plurality of PDSCHs include L PDSCHs, where L is an even number greater than 2, the TCI state for receiving the PDSCH is determined according to the mapping rule of the TCI state.

Specifically, the mapping rule of TCI state is the cyclic mapping or the sequential mapping.

In some embodiments, in case that the mapping rule of TCI state is the cyclic mapping, when h is an odd number, the odd-numbered PDSCH uses the TCI state corresponding to the i^{th} PDCCH, and the even-numbered PDSCH uses the TCI state different from the TCI state corresponding to the i^{th} TCI state in the N TCI states; or when h is an even number, the even-numbered PDSCH uses the TCI state corresponding to the i^{th} PDCCH, and the odd-numbered PDSCH uses the TCI state different form the TCI state corresponding to the i^{th} PDCCH in the N TCI states.

In case that the mapping rule of TCI state is the cyclic mapping, when h is 1, the first PDSCH uses the TCI state corresponding to the i^{th} PDCCH, the second PDSCH uses the TCI state different from the TCI state corresponding to the i^{th} PDCCH in the N TCI states, the third PDSCH uses the TCI state corresponding to the i^{th} PDCCH, and the fourth PDSCH uses the TCI state different from the TCI state corresponding to the i^{th} PDCCH in the N TCI states, following this rule.

For example, the plurality of PDCCHs include 2 PDCCHs. The first PDCCH uses TCI state #1, and the second PDCCH uses TCI state #2. The plurality of PDSCHs include 4 PDSCHs, since the second (i.e., h=2) PDCCH overlaps with the first (i.e., i=1) PDSCH in the time domain, the first PDSCH needs to use the same TCI state#2 as the second PDCCH, the second PDSCH uses TCI state#1, the third PDSCHs uses TCI state #2, and the fourth PDSCH uses TCI state #1.

In embodiments of the present disclosure, in case that the mapping rule of the TCI state is the cyclic mapping, and the h^{th} PDSCH is an odd-number PDSCH or an even-number PDSCH, different rules for determining the TCI state of the PDSCH are used, so that the TCI state of the network device sending the PDSCH is consistent with the TCI state of the terminal device receiving the PDSCH, thereby improving beam-based transmission performance.

In some embodiments, in case that the mapping rule of the N TCI state is the sequential mapping, a (4j+1)^{th} PDSCH and a (4j+2)^{th} PDSCH use the TCI state corresponding to the i^{th} PDCCH, and a (4j+3)^{th} PDSCH and a (4j+4)^{th} PDSCH use a TCI state different from the TCI state corresponding to the i^{th} PDCCH in the N TCI states, where j is an integer greater than or equal to 0; or a first L/2 PDSCHs use the TCI state corresponding to the i^{th} PDCCH, and a last L/2 PDSCHs use a TCI state different from the TCI state corresponding to the i^{th} PDCCH in the N TCI states.

When the value of h is 1, in case of the time domain resources occupied by the i^{th} PDCCH in the plurality of PDCCHs overlapping with the time domain resources occupied by the first PDSCH in the plurality of PDSCHs, the TCI state for receiving the PDSCH is determined. The first PDSCH and the second PDSCH use the TCI state corresponding to the i^{th} PDCCH, the third PDSCH and the fourth PDSCH use a TCI state different from the TCI state corresponding to the i^{th} PDCCH in the N TCI states, and the fifth PDSCH and the sixth PDSCH use the TCI state corresponding to the i^{th} PDCCH, and the seventh PDSCH and the eighth PDSCH use the TCI state different from the TCI state corresponding to the i^{th} PDCCH in the N TCI states, following this rule, which solves the problem that in case of the time domain resources occupied by the i^{th} PDCCH in the plurality of PDCCHs overlapping with the time domain resources occupied by the first PDSCH in the plurality of PDSCHs, the TCI state for receiving the PDSCH is determined.

For example, the plurality of PDCCHs include 2 PDCCHs, the first PDCCH uses TCI state #1, and the second PDCCH uses TCI state #2; the plurality of PDSCHs include 4 PDSCHs, since the second (i.e., h=2) PDCCH overlaps with the first (i.e.,i=1) PDSCH in the time domain, the first PDSCH and the second PDSCH need to use the same TCI state#2 as the second PDCCH, and the third PDSCH and the fourth PDSCH uses TCI state#1.

In other embodiments, the M TCI states are not identical with the N TCI states.

In some embodiments, the value of N is 2, and the plurality of PDSCHs include two PDSCHs. The first PDSCH uses the first TCI state in the N TCI states, and the second PDSCH uses the second TCI in the N TCI states; or the first PDSCH uses the second TCI state in the N TCI states, and the second PDSCH uses the first TCI state in the N TCI states.

When the M TCI states are not identical with the N TCI states, the first PDSCH uses the first TCI state of the two TCI states and the second PDSCH uses the second TCI of the two TCI states; or the first PDSCH uses the second TCI state of the two TCI states and the second PDSCH uses the first TCI state of the two TCI states.

In embodiments of the present disclosure, when the first PDSCH uses the first TCI state of the two TCI states, and the second PDSCH uses the second TCI state of the two TCI states, since the time domain resources occupied by the first PDSCH overlaps with the time domain resources occupied by the i^{th} PDCCH, the first PDSCH uses the same TCI state as the i^{th} PDCCH, and the second PDSCH remains unchanged and uses the second TCI state of the two TCI states, or the second PDSCH uses the first TCI state of the two TCI states, which is regarded as the first time.

For example, the plurality of PDCCHs include 2 PDCCHs, the first PDCCH uses TCI state #1, and the second PDCCH uses TCI state #2; the plurality of PDSCHs include 2 PDSCHs, and the TCI states corresponding to the plurality of PDSCHs are TCI state #3 and TCI state #4. Since the second (i.e., h=2) PDCCH overlaps with the first (i.e., i=1) PDSCH in the time domain, the first PDSCH needs to use the same TCI state#2 as the second PDCCH, and the second PDSCH uses TCI state#4 without considering whether the first PDSCH uses TCI state#3; or the second PDSCH uses TCI state#3, since the first PDSCH does not use TCI state#3, the second PDSCH uses starting from TCI state #3.

In some embodiments, the value of N is 2, and the plurality of PDSCHs include L PDSCHs, where L is an even number greater than 2; the TCI state for receiving the PDSCH is determined according to the mapping rule of the cyclic mapping or the sequential mapping.

In some embodiments, according to the mapping rule of the cyclic mapping, the odd-numbered PDSCH uses the first TCI state in the N TCI states, and the even-numbered PDSCH uses the second TCI state in the N TCI states; the PDSCHs occupying time domain resources not overlapping with the time domain resources occupied by the first PDSCH in the plurality of PDSCHs remain unchanged or are postponed in sequence; or the odd-numbered PDSCH uses the second TCI state in the N TCI states, and the even-numbered PDSCH uses the first TCI state in the N TCI states; the PDSCHs occupying the time domain resources not overlapping with the time domain resources occupied by the first PDSCH in the plurality of PDSCHs remain unchanged or are postponed in sequence.

For example, the plurality of PDCCHs include 2 PDCCHs, the first PDCCH uses TCI state #1, and the second PDCCH uses TCI state #2; the plurality of PDSCHs include 4 PDSCHs, and the TCI states corresponding to the plurality of PDSCHs are TCI state #3 and TCI state #4. Since the second (i.e., h=2) PDCCH overlaps with the first (i.e., i=1) PDSCH in the time domain, the first PDSCH needs to use the same TCI state#2 as the second PDCCH, and the second PDSCH uses TCI state #4 without considering whether the first PDSCH uses TCI state #3, the third PDSCH uses TCI state #3, the fourth PDSCH uses TCI state #4; or the second PDSCH uses TCI state #3 (since the first PDSCH does not use TCI state#3, the second PDSCH starts from TCI state#3), the third PDSCH uses TCI state#4, and the fourth PDSCH uses TCI state#3.

In some embodiments, according to the mapping rule of the sequential mapping, a (4k+1)^{th} PDSCH and a (4k+2)^{th} PDSCH use the first TCI state, and a (4k+3)^{th} PDSCH and a (4k+4)^{th} PDSCH use the second TCI state, where k is an integer greater than or equal to 0; PDSCH occupying the time domain resources not overlapping with the time domain resources occupied by the first PDSCH in the plurality of PDSCHs remain unchanged or are postponed in sequence, or the first L/2 PDSCHs use the TCI state corresponding to the first PDCCH, the last L/2 PDSCHs use the TCI state different from the TCI state the TCI state corresponding to the second PDCCH in the N TCI states; the PDSCHs occupying the time domain resources not overlapping with the time domain resources occupied by the first PDSCH remain unchanged or are postponed in sequence.

For example, the plurality of PDCCHs include 2 PDCCHs, the first PDCCH uses TCI state #1, and the second PDCCH uses TCI state #2; the plurality of PDSCHs include 4 PDSCHs, and the TCI states corresponding to the plurality of PDSCHs are TCI state #3 and TCI state #4. Since the second (i.e., h=2) PDCCH overlaps with the first (i.e., i=1) PDSCH in the time domain, the first PDSCH needs to use the same TCI state#2 as the second PDCCH, the second PDSCH uses TCI state#3, and the third PDSCH and the fourth PDSCH use TCI state#4; or the second PDSCH and the third PDSCH use TCI state#3 (that is, since the first PDSCH does not use TCI state# 3, the second PDSCH starts from TCI state #3), and the fourth PDSCH uses TCI state #4.

In some embodiments, in case of the time domain resources occupied by at least one PDCCH overlapping with the time domain resources occupied by at least one PDSCH, determining the TCI state for receiving the PDSCH includes: the terminal device not expecting that time domain resources occupied by an s^{th} PDCCH and an (s+1)^{th} PDCCH in the plurality of PDCCHs overlap with the time domain resources occupied by one of the plurality of PDSCHs, where s is an integer greater than 0.

As shown in FIG. 3, which is a flow chart of another communication method provided by an embodiment of the present disclosure.

As shown in FIG. 3, the method is performed by a network device. The method may include but is not limited to the following steps.

In step S 10, configuration information of a terminal device is send. The configuration information includes time domain information of a plurality of PDCCHs and M TCI states for sending the plurality of PDCCHs, where M is an integer greater than 0; the configuration information also includes time domain resource information of a plurality of PDSCHs and N TCI states for sending the plurality of PDSCHs, where N is an integer greater than 0.

In step S20, in case of the time domain resources occupied by at least one PDCCH overlapping with the time domain resources occupied by at least one PDSCH, the TCI state for sending the PDSCH is determined.

The time domain resources occupied by at least one PDCCH overlapping with time domain resources occupied by at least one PDSCH includes: the time domain resources occupied by one PDCCH overlapping with the time domain resources occupied by one PDSCH; the time domain resources occupied by one PDCCH overlapping with the time domain resources occupied by the plurality of PDSCHs; the time domain resources occupied by the plurality of PDCCHs overlapping with the time domain resources occupied by one PDSCH; or the time domain resources occupied by the plurality of PDCCHs overlapping with the time domain resources occupied by the plurality of PDSCHs, etc.; where the plurality is two or more.

It is understood that in case of the time domain resources occupied by at least one PDCCH overlapping with the time domain resources occupied by at least one PDSCH, the terminal device may need to use two TCI states to receive the same PDSCH, and the time for switching the TCI states may cause reception interruption, or the terminal device may not be able to support reception using more than two TCI states, thus affecting beam-based transmission performance.

In embodiments of the present disclosure, when the time domain resources occupied by at least one PDCCH overlap with the time domain resources occupied by at least one PDSCH, the TCI state for sending the PDSCHs is determined, so that the TCI state of the network device sending the PDSCH remains consistent with the TCI state of the terminal device receiving the PDSCH, thereby improving beam-based transmission performance.

By implementing embodiments of the present disclosure, the network device sends configuration information of the network device. The configuration information includes the time domain information of the plurality of PDCCHs and M TCI states for sending the plurality of PDCCHs, where M is an integer greater than 0. The configuration information also includes the time domain resource information of the plurality of PDSCHs and N TCI states for sending the plurality of PDSCHs, where N is an integer greater than 0. In case of the time domain resources occupied by at least one PDCCH overlapping with the time domain resources occupied by at least one PDSCH, the TCI state for sending the PDSCH is determined. In this way, the TCI state of the network sending the PDSCH may be consistent with the TCI state of the terminal receiving the PDSCH, thereby improving beam-based transmission performance.

In some embodiments, the time domain resources occupied by at least one PDCCH overlapping with the time domain resources occupied by at least one PDSCH includes: the time domain resources occupied by an i^{th} PDCCH in the plurality of the PDCCHs overlapping with the time domain resources occupied by an h^{th} PDSCH in the plurality of PDSCHs, where i is an integer greater than 0, and h is an integer greater than 0.

In an illustrative embodiment, when i is 1 and h is 1, the time domain resources occupied by the first PDCCH in the plurality of PDCCHs overlap with the time domain resources occupied by the first PDSCH in the plurality of PDSCHs.

In another illustrative embodiment, when i is 2 and h is 1, the time domain resources occupied by the second PDCCH in the plurality of PDCCHs overlap with the time domain resources occupied by the first PDSCH in the plurality of PDSCHs.

In some embodiments, the time domain resources occupied by the i^{th} PDCCH in the plurality of PDCCHs overlapping with the time domain resources occupied by the h^{th} PDSCH in the plurality PDSCHs includes: a transmission mode of the plurality of PDCCHs being an intra-slot time division multiplexing (TDM) scheme, and a transmission mode of the plurality of PDSCHs being the intra-slot TDM scheme; the transmission mode of the plurality of PDCCHs being the intra-slot TDM scheme, and the transmission mode of the plurality of PDSCHs being an inter-slot TDM scheme; the transmission mode of the plurality of PDCCHs being the inter-slot TDM scheme, and the transmission mode of the plurality of PDSCHs being the inter-slot TDM scheme; the transmission mode of the plurality of PDCCHs being a single frequency network (SFN) or a frequency division multiplexing (FDM) scheme, and the transmission mode of the plurality of PDSCHs being the SFN, a space division multiplexing (SDM) scheme or the FDM scheme; or the transmission mode of the plurality of PDCCHs being the SFN or the FDM scheme, and the transmission mode of the plurality of PDSCHs being the TDM scheme.

The time domain resources occupied by the i^{th} PDCCH in the plurality of PDCCHs overlapping with the time domain resources occupied by the h^{th} PDSCH in the plurality of PDSCHs, includes: the plurality of PDCCHs being two PDCCHs, and i is an integer greater than 0 and less than or equal to 2; the plurality of PDSCHs being two PDSCHs, h is an integer greater than 0 and less than or equal to 2; or the plurality of PDSCHs may be more than two.

In an illustrative embodiment, the plurality of PDCCHs are two PDCCHs, and the plurality of PDSCHs are two PDSCHs.

The transmission mode of the two PDCCHs is the intra-slot TDM scheme, and the transmission mode of the two PDSCHs is the intra-slot TDM scheme; or the transmission mode of the two PDCCHs is the intra-slot TDM scheme, and the transmission mode of the two PDSCHs is the inter-slot TDM scheme; or the transmission mode of the two PDCCHs is the inter-slot TDM scheme, and the transmission mode of the two PDSCHs is the inter-slot TDM scheme; or the transmission mode of two PDCCH is the SFN or the FDM scheme, and the transmission mode of two PDSCHs is the SFN, the SDM or the FDM scheme; or the transmission mode of the two PDCCHs is the SFN or the FDM scheme, and the transmission mode of the two PDSCH is the TDM scheme.

In some embodiments, determining the TCI state for sending the PDSCH includes: the TCI state corresponding to the i^{th} PDCCH being used for the h^{th} PDSCH.

In embodiments of the present disclosure, when the time domain resources occupied by the i^{th} PDCCH in the plurality of PDCCHs overlap with the time domain resources occupied by the h^{th} PDSCH in the plurality of PDSCHs, the h^{th} PDSCH uses the TCI state corresponding to the i^{th} PDCCH, where i is an integer greater than 0, and h is an integer greater than 0. In this way, the TCI state of the network device for sending the PDSCH may be consistent with the TCI state of the terminal device for receiving the PDSCH, thereby improving beam-based transmission performance.

In some embodiments, the M TCI states are identical with the N TCI states. For example, PDCCH# 1 needs to use a first TCI state, PDCCH#2 needs to use a second TCI state, PDSCH# 1 needs to use a third TCI state, and PDSCH#2 needs to use a fourth TCI state. Unified TCI state means that the first TCI state is the same as the third TCI state, and the second TCI state is the same as the fourth TCI state; or the first TCI state is the same as the fourth TCI state, and the second TCI state is the same as the third TCI state. That is to say, PDCCH#1 and PDSCH#1 use the same TCI state, PDCCH#2 and PDSCH#2 use the same TCI state; or PDCCH#1 and PDSCH#2 use the same TCI state, PDCCH#2 and PDSCH# 1 uses the same TCI state. The above situations may all be called "M TCI states and N TCI states being identical with the N TCI states".

It is understood that in the M TCI states of the plurality of PDCCHs and the N TCI states of the plurality of PDSCHs, the M TCI states are identical with the N TCI states, so that the TCI states of the terminal device receiving the PDCCH are identical with, and remain consistent with the TCI states of the terminal device receiving the PDSCH.

In some embodiments, a value of N is 2, the plurality of PDSCHs include two PDSCHs, and the PDSCH other than the h^{th} PDSCH uses a TCI state different from the TCI state corresponding to the i^{th} PDCCH in the N TCI states.

In embodiments of the present disclosure, when the time domain resources occupied by the i^{th} PDCCH in the plurality of PDCCHs overlap with the time domain resources occupied by the h^{th} PDSCH in two PDSCHs, PDSCHs other than the h^{th} PDSCH use the TCI state different from the TCI state corresponding to the i^{th} PDCCH in the two TCI states.

When h is 1, the second PDSCH uses a TCI state different from the TCI state corresponding to the i^{th} PDCCH in the two TCI states. Therefore, compared with the previous method, the corresponding relationship between the PDCCH and the TCI state occurs an opposite change.

For example, the plurality of PDCCHs include 2 PDCCHs, the first PDCCH uses TCI state#1, and the second PDCCH uses TCI state#2; the plurality of PDSCHs include 2 PDSCHs, and the first PDSCH uses TCI state#1, and the second PDSCH uses TCI state#2 according to a traditional mapping relationship. However, since the second (i.e., h=2) PDCCH overlaps with the first (i.e., i=1) PDSCH in the time domain, based on the present disclosure, the first PDSCH needs to use the same TCI state#2 as the second PDCCH, and the second PDSCH uses TCI state #1.

In some embodiments, a value of N is 2, and the plurality of PDSCHs include L PDSCHs, where L is an even number greater than 2. The TCI state for sending the PDSCH is determined according to the mapping rule of the TCI state. The mapping rule of the TCI state is a cyclic mapping or a sequential mapping.

In embodiments of the present disclosure, in case of the time domain resources occupied by the i^{th} PDCCH in the plurality of PDCCHs overlapping with the time domain resources occupied by the h^{th} PDSCH in the L PDSCHs, where i is an integer greater than 0, and h is an integer greater than 0, and the value of N being 2, the plurality of PDSCHs include L PDSCHs, where L is an even number greater than 2, the TCI state for sending the PDSCH is determined according to the mapping rule of the TCI state.

Specifically, the mapping rule of TCI state is the cyclic mapping or the sequential mapping.

In some embodiments, in case that the mapping rule of TCI state is the cyclic mapping, when h is an odd number, the odd-numbered PDSCH uses the TCI state corresponding to the i^{th} PDCCH, and the even-numbered PDSCH uses the TCI state different from the TCI state corresponding to the i^{th} TCI state in the N TCI states; or when h is an even number, the even-numbered PDSCH uses the TCI state corresponding to the i^{th} PDCCH, and the odd-numbered PDSCH uses the TCI state different form the TCI state corresponding to the i^{th} PDCCH in the N TCI states.

In case that the mapping rule of TCI state is the cyclic mapping, when h is 1, the first PDSCH uses the TCI state corresponding to the i^{th} PDCCH, the second PDSCH uses the TCI state different from the TCI state corresponding to the i^{th} PDCCH in the N TCI states, the third PDSCH uses the TCI state corresponding to the i^{th} PDCCH, and the fourth PDSCH uses the TCI state different from the TCI state corresponding to the i^{th} PDCCH in the N TCI states, following this rule.

For example, the plurality of PDCCHs include 2 PDCCHs. The first PDCCH uses TCI state #1, and the second PDCCH uses TCI state #2. The plurality of PDSCHs include 4 PDSCHs, since the second (i.e., h=2) PDCCH overlaps with the first (i.e., i=1) PDSCH in the time domain, the first PDSCH needs to use the same TCI state#2 as the second PDCCH, the second PDSCH uses TCI state# 1, the third PDSCHs uses TCI state #2, and the fourth PDSCH uses TCI state #1.

In embodiments of the present disclosure, in case that the mapping rule of the TCI state is the cyclic mapping, and the h^{th} PDSCH is an odd-number PDSCH or an even-number PDSCH, different rules for determining the TCI state of the PDSCH are used, so that the TCI state of the network device sending the PDSCH is consistent with the TCI state of the terminal device receiving the PDSCH, thereby improving beam-based transmission performance.

In some embodiments, in case that the mapping rule of the N TCI state is the sequential mapping, a (4j+1)^{th} PDSCH and a (4j+2)^{th} PDSCH use the TCI state corresponding to the i^{th} PDCCH, and a (4j+3)^{th} PDSCH and a (4j+4)^{th} PDSCH use a TCI state different from the TCI state corresponding to the i^{th} PDCCH in the N TCI states, where j is an integer greater than or equal to 0; or a first L/2 PDSCHs use the TCI state corresponding to the i^{th} PDCCH, and a last L/2 PDSCHs use a TCI state different from the TCI state corresponding to the i^{th} PDCCH in the N TCI states.

When the value of h is 1, in case of the time domain resources occupied by the i^{th} PDCCH in the plurality of PDCCHs overlapping with the time domain resources occupied by the first PDSCH in the plurality of PDSCHs, the TCI state for receiving the PDSCH is determined. The first PDSCH and the second PDSCH use the TCI state corresponding to the i^{th} PDCCH, the third PDSCH and the fourth PDSCH use a TCI state different from the TCI state corresponding to the i^{th} PDCCH in the N TCI states, and the fifth PDSCH and the sixth PDSCH use the TCI state corresponding to the i^{th} PDCCH, and the seventh PDSCH and the eighth PDSCH use the TCI state different from the TCI state corresponding to the i^{th} PDCCH in the N TCI states, following this rule, which solves the problem that in case of the time domain resources occupied by the i^{th} PDCCH in the plurality of PDCCHs overlapping with the time domain resources occupied by the first PDSCH in the plurality of PDSCHs, the TCI state for sending the PDSCH is determined.

For example, the plurality of PDCCHs include 2 PDCCHs, the first PDCCH uses TCI state #1, and the second PDCCH uses TCI state #2; the plurality of PDSCHs include 4 PDSCHs, since the second (i.e., h=2) PDCCH overlaps with the first (i.e.,i=1) PDSCH in the time domain, the first PDSCH and the second PDSCH need to use the same TCI state#2 as the second PDCCH, and the third PDSCH and the fourth PDSCH uses TCI state#1.

In other embodiments, the M TCI states are not identical with the N TCI states.

In some embodiments, the value of N is 2, and the plurality of PDSCHs include two PDSCHs. The first PDSCH uses the first TCI state in the N TCI states, and the second PDSCH uses the second TCI in the N TCI states; or the first PDSCH uses the second TCI state in the N TCI states, and the second PDSCH uses the first TCI state in the N TCI states.

When the M TCI states are not identical with the N TCI states, the first PDSCH uses the first TCI state of the two TCI states and the second PDSCH uses the second TCI of the two TCI states; or the first PDSCH uses the second TCI state of the two TCI states and the second PDSCH uses the first TCI state of the two TCI states.

In embodiments of the present disclosure, when the first PDSCH uses the first TCI state of the two TCI states, and the second PDSCH uses the second TCI state of the two TCI states, since the time domain resources occupied by the first PDSCH overlaps with the time domain resources occupied by the i^{th} PDCCH, the first PDSCH uses the same TCI state as the i^{th} PDCCH, and the second PDSCH remains unchanged and uses the second TCI state of the two TCI states, or the second PDSCH uses the first TCI state of the two TCI states, which is regarded as the first time.

For example, the plurality of PDCCHs include 2 PDCCHs, the first PDCCH uses TCI state #1, and the second PDCCH uses TCI state #2; the plurality of PDSCHs include 2 PDSCHs, and the TCI states corresponding to the plurality of PDSCHs are TCI state #3 and TCI state #4. Since the second (i.e., h=2) PDCCH overlaps with the first (i.e., i=1) PDSCH in the time domain, the first PDSCH needs to use the same TCI state#2 as the second PDCCH, and the second PDSCH uses TCI state#4 without considering whether the first PDSCH uses TCI state#3; or the second PDSCH uses TCI state#3, since the first PDSCH does not use TCI state#3, the second PDSCH uses starting from TCI state #3.

In some embodiments, the value of N is 2, and the plurality of PDSCHs include L PDSCHs, where L is an even number greater than 2; the TCI state for sending the PDSCH is determined according to the mapping rule of the cyclic mapping or the sequential mapping.

In some embodiments, according to the mapping rule of the cyclic mapping, the odd-numbered PDSCH uses the first TCI state in the N TCI states, and the even-numbered PDSCH uses the second TCI state in the N TCI states; the PDSCHs occupying time domain resources not overlapping with the time domain resources occupied by the first PDSCH remain unchanged or are postponed in sequence; or the odd-numbered PDSCH uses the second TCI state in the N TCI states, and the even-numbered PDSCH uses the first TCI state in the N TCI states; the PDSCHs occupying the time domain resources not overlapping with the time domain resources occupied by the first PDSCH in the plurality of PDSCHs remain unchanged or are postponed in sequence.

For example, the plurality of PDCCHs include 2 PDCCHs, the first PDCCH uses TCI state #1, and the second PDCCH uses TCI state #2; the plurality of PDSCHs include 4 PDSCHs, and the TCI states corresponding to the plurality of PDSCHs are TCI state #3 and TCI state #4. Since the second (i.e., h=2) PDCCH overlaps with the first (i.e., i=1) PDSCH in the time domain, the first PDSCH needs to use the same TCI state#2 as the second PDCCH, and the second PDSCH uses TCI state #4 without considering whether the first PDSCH uses TCI state #3, the third PDSCH uses TCI state #3, the fourth PDSCH uses TCI state #4; or the second PDSCH uses TCI state #3 (since the first PDSCH does not use TCI state#3, the second PDSCH starts from TCI state#3), the third PDSCH uses TCI state#4, and the fourth PDSCH uses TCI state#3.

In some embodiments, according to the mapping rule of the sequential mapping, a (4k+1)^{th} PDSCH and a (4k+2)^{th} PDSCH use the first TCI state, and a (4k+3)^{th} PDSCH and a (4k+4)^{th} PDSCH use the second TCI state, where k is an integer greater than or equal to 0; the PDSCH occupying the time domain resources not overlapping with the time domain resources occupied by the first PDSCH in the plurality of PDSCHs remain unchanged or are postponed in sequence; or a first L/2 PDSCHs use the TCI state corresponding to the first PDCCH, a last L/2 PDSCHs use the TCI state different from the TCI state the TCI state corresponding to the second PDCCH in the N TCI states; the PDSCHs occupying the time domain resources not overlapping with the time domain resources occupied by the first PDSCH remain unchanged or are postponed in sequence.

For example, the plurality of PDCCHs include 2 PDCCHs, the first PDCCH uses TCI state #1, and the second PDCCH uses TCI state #2; the plurality of PDSCHs include 4 PDSCHs, and the TCI states corresponding to the plurality of PDSCHs are TCI state #3 and TCI state #4. Since the second (i.e., h=2) PDCCH overlaps with the first (i.e., i=1) PDSCH in the time domain, the first PDSCH needs to use the same TCI state#2 as the second PDCCH, the second PDSCH uses TCI state#3, and the third PDSCH and the fourth PDSCH use TCI state#4; or the second PDSCH and the third PDSCH use TCI state#3 (that is, since the first PDSCH does not use TCI state# 3, the second PDSCH starts from TCI state #3), and the fourth PDSCH uses TCI state #4.

In some embodiments, in case of the time domain resources occupied by at least one PDCCH overlapping with the time domain resources occupied by at least one PDSCH, determining the TCI state for sending the PDSCH includes: the terminal device not expecting that time domain resources occupied by an s^{th} PDCCH and an (s+1)^{th} PDCCH in the plurality of PDCCHs overlap with the time domain resources occupied by one of the plurality of PDSCHs, where s is an integer greater than 0.

In the above-mentioned embodiments of the present disclosure, the method provided by embodiments of the present disclosure is introduced from perspectives of the network device and the first terminal device. In order to implement each function in the method provided by the above embodiments of the present disclosure, the network device and the first terminal device may include a hardware structure and a software module to implement the above functions in the form of a hardware structure, a software module, or a combination of a hardware structure and a software module. A certain function in the above functions may be executed by a hardware structure, a software module, or a combination of a hardware structure and a software module.

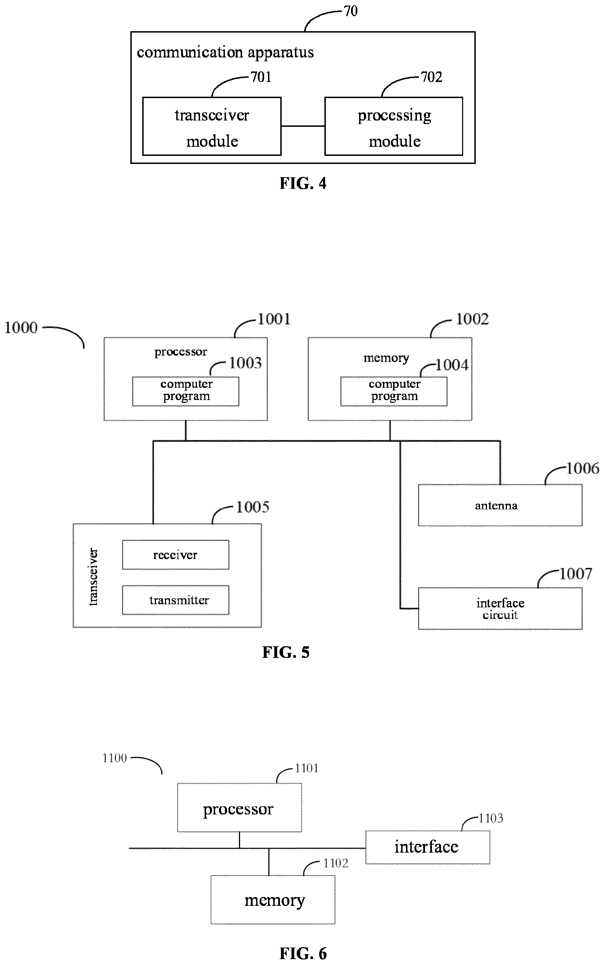

As shown in FIG. 4, which is a schematic diagram of a communication apparatus 70 provided by an embodiment of the present disclosure. The communication apparatus 70 shown in FIG. 4 may include a transceiver module 701 and a processing module 702. The transceiver module 701 may include a sending module and/or a receiving module. The sending module is configured to implement the sending function, and the receiving module is configured to implement the receiving function. The transceiver module 701 may implement the sending function and/or the receiving function.

The communication apparatus 70 may be a terminal device, a device in the terminal device, or a device that may be used in conjunction with the terminal device. Alternatively, the communication apparatus 70 may be a network device, a device in a network device, or a device that may be used in conjunction with the network device.

The communication apparatus 70 is a terminal device, including: a transceiver module configured to receive configuration information of a network device, in which the configuration information includes time domain information of a plurality of physical downlink control channels (PDCCHs) and M transmission configuration indicator (TCI) states for receiving the plurality of the PDCCHs, where M is an integer greater than 0; the configuration information further includes time domain resource information of a plurality of physical downlink shared channels (PDSCHs) and N TCI states for receiving the plurality of PDSCHs, where N is an integer greater than 0; and a processing module configured to determine a TCI state for receiving at least one PDSCH in case of time domain resources occupied by at least one PDCCH overlapping with time domain resources occupied by the at least one PDSCH.

The communication apparatus 70 is a network device, including a transceiver module configured to send configuration information of a terminal device, in which the configuration information includes time domain information of a plurality of physical downlink control channels (PDCCHs) and M transmission configuration indication (TCI) states for sending the plurality of PDCCHs, where M is an integer greater than 0; the configuration information also includes time domain resource information of a plurality of physical downlink shared channels (PDSCHs) and N TCI states for sending the plurality of PDSCHs, where N is an integer greater than 0; and a processing module configured to determine a TCI state for sending at least one PDSCH in case of time domain resources occupied by at least one PDCCH overlapping with time domain resources occupied by the at least one PDSCH.

As shown in FIG. 5, which is a schematic diagram of a communication device 1000 provided by an embodiment of the present application.

The communication device 1000 may be a network device, a terminal device, or a chip, a chip system, or a processor that supports the network device to implement the above-mentioned method, or also may be a chip, a chip system, or a processor that supports the terminal device to implement the above-mentioned method. The device may be configured to implement the method described in the above-mentioned method embodiments. For details, reference may be made to the description in the above-mentioned method embodiments.

The communication device 1000 may include one or more processors 1001. The processor 1001 may be a general-purpose processor or a special-purpose processor, or the like. For example, it may be a baseband processor or a central processing unit. The baseband processor may be used to process communication protocols and communication data. The central processor may be used to control communication devices (such as base stations, baseband chips, terminal device, terminal device chips, DU or CU, etc.) and execute computer programs and processing data for computer programs.

Alternatively, the communication device 1000 may also include one or more memories 1002, on which a computer program 1004 may be stored. The memory 1002 executes the computer program 1004, so that the communication device 1000 performs the method described in the above-mentioned method embodiments. Alternatively, the memory 1002 may also store data. The communication device 1000 and the memory 1002 may be provided separately or integrated together.

Alternatively, the communication device 1000 may also include a transceiver 1005 and an antenna 1006. The transceiver 1005 may be called a transceiver unit, a transceiver, a transceiver circuit, etc., and is configured to implement transceiver functions. The transceiver 1005 may include a receiver and a transmitter. The receiver may be called a receiver or a receiving circuit, etc., and is configured to implement the receiving function. The transmitter may be called a transmitter, a transmitting circuit, etc., and configured to implement the transmitting function.

Alternatively, the communication device 1000 may also include one or more interface circuits 1007. The interface circuit 1007 is configured to receive code instructions and transmit them to the processor 1001. The processor 1001 executes the code instructions to cause the communication device 1000 to perform the method described in the above-mentioned method embodiments.

The communication device 1000 is a terminal device. The transceiver 1005 is configured to execute step S1 in FIG.2. The processor 1001 is configured to execute step S0 in FIG. 2.

The communication device 1000 is a network device. The transceiver 1005 is configured to execute step S10 in FIG.3. The processor 1001 is configured to execute step S20 in FIG. 3.

In one implementation, the processor 1001 may include a transceiver for implementing receiving and transmitting functions. For example, the transceiver may be a transceiver circuit, an interface, or an interface circuit. The transceiver circuits, the interfaces or the interface circuits configured to implement the receiving and transmitting functions may be separate or integrated together. The above-mentioned transceiver circuit, the interface or the interface circuit may be configured for reading and writing codes/data, or the above-mentioned transceiver circuit, the interface or the interface circuit may be configured for signal transmission or transfer.

In one implementation, the processor 1001 may store a computer program 1003, and the computer program 1003 runs on the processor 1001, causing the communication device 1000 to perform the method described in the above-mentioned method embodiment. The computer program 1003 may be embedded in the processor 1001, in which case the processor 1001 may be implemented in hardware.

In one implementation, the communication device 1000 may include a circuit, and the circuit may implement sending or receiving or communicating functions in the above-mentioned method embodiments. The processor and transceiver described in the present disclosure may be implemented in an integrated circuits (IC), an analog IC, a radio frequency integrated circuits (RFIC), a mixed signal (IC), an application specific integrated circuits (ASIC), a printed circuit boards (PCB), electronic equipment, etc. The processor and transceiver may also be manufactured using various IC process technologies, such as a complementary metal oxide semiconductor (CMOS), aN-type metal-oxide-semiconductor (NMOS), a P-type metal oxide semiconductor (PMOS), a bipolar junction transistor (BJT), a bipolar CMOS (BiCMOS), a silicon germanium (SiGe), a gallium arsenide (GaAs), etc.

The communication device described in the above-mentioned embodiments may be a terminal device (such as the terminal device in the above-mentioned method embodiments), but the scope of the communication device described in the present disclosure is not limited thereto, and the structure of the communication device is not limited by FIG. 5. The communication device may be a stand-alone device or may be part of a larger device. For example, the communication device may be:
(1) independent integrated circuit (IC), or chip, or chip system or subsystem;
(2) a collection of one or more ICs, or, the IC collection may also include storage components for storing data and computer programs;
(3) ASIC, such as modem;
(4) modules that may be embedded in other devices;
(5) receivers, terminal device, intelligent terminal device, cellular phones, wireless equipment, handheld devices, mobile units, vehicle-mounted equipment, network device, cloud equipment, artificial intelligence equipment, etc.;
(6) others.

For the case where the communication device may be a chip or a chip system, reference may be made to FIG. 6, which is a structural diagram of a chip provided in an embodiment of the present disclosure.

As shown in FIG. 6, a chip 1100 includes a processor 1101 and an interface 1103. A number of the processors 1101 may be one or more, and a number of the interfaces 1103 may be multiple.

For the case where the chip is configured to implement the functions of the terminal device in embodiments of the present disclosure:
the interface 1103 configured to receive code instructions and transmit them to the processor; and
the processor 1101 configured to run the code instructions to perform the communication method described in the above-mentioned embodiments.

For the case where the chip is configured to implement the functions of the network device in embodiments of the present disclosure:
the interface 1103 configured to receive code instructions and transmit them to the processor; and
the processor 1101 configured to the run code instructions to perform the communication methods described in the above-mentioned embodiments.

Alternatively, the chip 1100 also includes a memory 1102, which is configured to store necessary computer programs and data.

Those skilled in the art may also understand that the various illustrative logical blocks and steps listed in embodiments of the present disclosure may be implemented by electronic hardware, computer software, or a combination of both. Whether such functionality is implemented in hardware or software depends on the specific application and overall system design requirements. Those skilled in the art may use various methods to implement the described functions for each specific application, but such implementation should not be understood as exceeding the protection scope of embodiments of the present application.

The present disclosure also provides a readable storage medium on which instructions are stored, and when the instructions are executed by a computer, the functions of any of the above-mentioned method embodiments are implemented.

The present disclosure also provides a computer program product. When the computer program produce is executed by a computer, the functions of any of the above-mentioned method embodiments are implemented.

In the above-mentioned embodiments, it may be implemented in whole or in part by software, hardware, firmware, or any combination thereof. When implemented using software, it may be implemented in whole or in part in the form of a computer program product. The computer program product includes one or more computer programs. When a computer program is loaded and executed on a computer, processes or functions described in embodiments of the present disclosure are generated in whole or in part. The computer may be a general purpose computer, a special purpose computer, a computer network, or other programmable device. The computer program may be stored in or transferred from one computer-readable storage medium to another computer-readable storage medium, for example, the computer program may be transmitted from a website, a computer, a server, or a data center via a wireline (e.g. coaxial cable, optical fiber, digital subscriber line (DSL)) or wireless (such as infrared, wireless, microwave, etc.) means to transmit to another website, computer, server or data center). The computer-readable storage media may be any available media that may be accessed by a computer or a data storage device such as a server, data center, or other integrated media that contains one or more available media. The usable media may be magnetic media (e.g., floppy disks, hard disks, tapes), optical media (e.g., high-density digital video discs (DVDs)), or semiconductor media (e.g., solid state disks (SSDs)) and the like.

Unless the context otherwise requires, throughout the specification and claims, the term "comprise" and its other forms such as a third person singular "comprises" and the present participle "comprising" are interpreted as open and inclusive, it means "including, but not limited to". In the description of the specification, the terms "some embodiments", "illustrative embodiments" and the like are intended to indicate that a particular feature, structure, material or characteristic associated with embodiments or examples is included in at least one embodiment or example. The schematic representations of the above terms do not necessarily refer to the same embodiment or example. Furthermore, the particular features, the structures, the materials or the characteristics described may be included in any suitable manner in any one or more embodiments or examples.

Those skilled in the art may understand that the first, second, and other numerical numbers involved in the present disclosure are only for convenience of description and are not used to limit the scope of embodiments of the present disclosure and also indicate the order.

At least one in the present disclosure may also be described as one or more, and the plurality may be two, three, four or more, and the present disclosure is not limited. In embodiment of the present disclosure, for a technical feature, the technical feature is distinguished by "first", "second", "third", "A", "B", "C" and "D" etc. The technical features described in "first", "second", "third", "A", "B", "C" and "D" are in no particular order or order. "A and/or B" includes the following three combinations: A only, B only, and a combination of A and B.

Those skilled in the art will appreciate that the units and algorithm steps of each example described in conjunction with embodiments disclosed herein may be implemented with electronic hardware, or a combination of computer software and electronic hardware. Whether these functions are performed in hardware or software depends on the specific application and design constraints of the technical solution. Those skilled in the art may implement the described functionality using different methods for each specific application, but such implementations should not be considered to be beyond the scope of the present disclosure.

Those skilled in the art may clearly understand that for the convenience and simplicity of description, the specific working processes of the systems, devices and units described above may be referred to the corresponding processes in the foregoing method embodiments, and will not be described again here.

The above are only specific embodiments of the present disclosure, but the protection scope of the present disclosure is not limited thereto. Any skilled in the art may easily think of changes or substitutions within the technical scope disclosed in the present disclosure, which are covered by the protection scope of the present disclosure. Therefore, the protection scope of the present disclosure should be subject to the protection scope of the claims.

## Claims

1. A communication method, performed by a terminal device and comprising:
receiving configuration information of a network device, wherein the configuration information comprises time domain information of a plurality of physical downlink control channels (PDCCHs) and M transmission configuration indicator (TCI) states for receiving the plurality of the PDCCHs, where M is an integer greater than 0; the configuration information further comprises time domain resource information of a plurality of physical downlink shared channels (PDSCHs) and N TCI states for receiving the plurality of PDSCHs, where N is an integer greater than 0;
determining a TCI state for receiving at least one PDSCH, in case of time domain resources occupied by at least one PDCCH overlapping with time domain resources occupied by the at least one PDSCH.

2. The method according to claim 1, wherein the time domain resources occupied by the at least one PDCCH overlapping with the time domain resources occupied by the at least one PDSCH comprises:
time domain resources occupied by an i^{th} PDCCH in the plurality of the PDCCHs overlapping with time domain resources occupied by an h^{th} PDSCH in the plurality of PDSCHs, where i is an integer greater than 0, and h is an integer greater than 0.

3. The method according to claim 2, wherein the time domain resources occupied by the i^{th} PDCCH in the plurality of PDCCHs overlapping with time domain resources occupied by the h^{th} PDSCH in the plurality of PDSCHs comprises at least one of:
a transmission mode of the plurality of PDCCHs being an intra-slot time division multiplexing (TDM) scheme, and a transmission mode of the plurality of PDSCHs being the intra-slot TDM scheme;
the transmission mode of the plurality of PDCCHs being the intra-slot TDM scheme, and the transmission mode of the plurality of PDSCHs being an inter-slot TDM scheme;
the transmission mode of the plurality of PDCCHs being the inter-slot TDM scheme, and the transmission mode of the plurality of PDSCHs being the inter-slot TDM scheme;
the transmission mode of the plurality of PDCCHs being a single frequency network (SFN) or a frequency division multiplexing (FDM) scheme, and the transmission mode of the plurality of PDSCHs being the SFN, a space division multiplexing (SDM) scheme or the FDM scheme; or
the transmission mode of the plurality of PDCCHs being the SFN or the FDM scheme, and the transmission mode of the plurality of PDSCHs being the TDM scheme.

4. The method according to claim 2 or 3, wherein determining the TCI state for receiving the at least one PDSCH comprises:
a TCI state corresponding to the i^{th} PDCCH being used for the h^{th} PDSCH.

5. The method according to claim 4, wherein the M TCI states are identical with the N TCI states.

6. The method according to claim 5, wherein a value of N is 2, the plurality of PDSCHs comprise two PDSCHs, and the PDSCH other than the h^{th} PDSCH uses a TCI state different from the TCI state corresponding to the i^{th} PDCCH in the N TCI states.

7. The method according to claim 5, wherein a value of N is 2, and the plurality of PDSCHs comprise L PDSCHs, where L is an even number greater than 2;
the two TCI states for receiving the L PDSCHs is determined according to a mapping rule of the two TCI states; wherein the mapping rule of the two TCI states is a cyclic mapping or a sequential mapping.

8. The method according to claim 7, further comprising:
in case that the mapping rule of the N TCI states is the cyclic mapping, the TCI state corresponding to the i^{th} PDCCH being used for odd-numbered PDSCHs, and a TCI state different from the TCI state corresponding to the i^{th} PDCCH in the N TCI states being used for even-numbered PDSCHs, in case that h is an odd number; or
the TCI state corresponding to the i^{th} PDCCH being used for even-numbered PDSCHs, and the TCI state different from the TCI state corresponding to the i^{th} PDCCH in the N TCI states being used for odd-numbered PDSCHs, in case that h is an even number.

9. The method according to claim 7, further comprising:
in case that the mapping rule of the N TCI state is the sequential mapping, the TCI state corresponding to the i^{th} PDCCH being used for a (4j+1)^{th} PDSCH and a (4j+2)^{th} PDSCH, and a TCI state different from the TCI state corresponding to the i^{th} PDCCH in the N TCI states being used for a (4j+3)^{th} PDSCH and a (4j+4)^{th} PDSCH, where j is an integer greater than or equal to 0; or
the TCI state corresponding to the i^{th} PDCCH being used for a first L/2 PDSCHs, and a TCI state different from the TCI state corresponding to the i^{th} PDCCH in the N TCI states being used for a last L/2 PDSCHs.

10. The method according to claim 4, wherein the M TCI states are not identical with the N TCI states.

11. The method according to claim 10, wherein a value of N is 2, the plurality of PDSCHs comprise two PDSCHs;
a first PDSCH uses a first TCI state in the N TCI states, and a second PDSCH uses a second TCI state in the N TCI states; or
the first PDSCH uses a second TCI state in the N TCI states, and the second PDSCH uses the first TCI state in the N TCI states.

12. The method according to claim 10, wherein a value of N is 2, and the plurality of PDSCHs comprise L PDSCHs, where L is an even number greater than 2;
the two TCI states for receiving the L PDSCHs are determined according to a mapping rule of a cyclic mapping or a sequential mapping.

13. The method according to claim 12, further comprising:
a first TCI state in the N TCI states being used for odd-numbered PDSCHs, and a second TCI state in the N TCI states being used for even-numbered PDSCHs, according to the mapping rule of the cyclic mapping; wherein PDSCHs occupying time domain resources not overlapping with the time domain resources occupied by the first PDSCH remain unchanged or are postponed in sequence; or
a second TCI state in the N TCI states being used for odd-numbered PDSCHs, and a first TCI state in the N TCI states being used for even-numbered PDSCHs; wherein PDSCHs occupying the time domain resources not overlapping with the time domain resources occupied by the first PDSCH remain unchanged or are postponed in sequence.

14. The method according to claim 12, further comprising:
a first TCI state being used for a (4k+1)^{th} PDSCH and a (4k+2)^{th} PDSCH, and a second TCI state being used for a (4k+3)^{th} PDSCH and a (4k+4)^{th} PDSCH, according to the mapping rule of the sequential mapping, where k is an integer greater than or equal to 0; wherein PDSCHs occupying the time domain resources not overlapping with the time domain resources occupied by the first PDSCH remain unchanged or are postponed in sequence; or
the TCI state corresponding to the first PDCCH being used for a first L/2 PDSCHs, and a TCI state different from the TCI state corresponding to the second PDCCH in the N TCI states being used for a last L/2 PDSCHs; wherein PDSCHs occupying the time domain resources not overlapping with the time domain resources occupied by the first PDSCH remain unchanged or are postponed in sequence.

15. The method according to claim 1, wherein determining a TCI state for receiving at least one PDSCH in case of time domain resources occupied by at least one PDCCH overlapping with time domain resources occupied by the at least one PDSCH comprises:
the terminal device not expecting that time domain resources occupied by an s^{th} PDCCH and an (s+1)^{th} PDCCH in the plurality of PDCCHs overlap with the time domain resources occupied by one of the plurality of PDSCHs, where s is an integer greater than 0.

16. A communication method, performed by a network device and comprising:
sending configuration information of a terminal device, wherein the configuration information comprises time domain information of a plurality of physical downlink control channels (PDCCHs) and M transmission configuration indication (TCI) states for sending the plurality of PDCCHs, where M is an integer greater than 0; the configuration information also comprises time domain resource information of a plurality of physical downlink shared channels (PDSCHs) and N TCI states for sending the plurality of PDSCHs, where N is an integer greater than 0;
determining a TCI state for sending at least one PDSCH in case of time domain resources occupied by at least one PDCCH overlapping with time domain resources occupied by the at least one PDSCH.

17. The method according to claim 16, wherein the time domain resources occupied by the at least one PDCCH overlapping with the time domain resources occupied by the at least one PDSCH comprises:
time domain resources occupied by an i^{th} PDCCH in the plurality of the PDCCHs overlapping with time domain resources occupied by an h^{th} PDSCH in the plurality of PDSCHs, where i is an integer greater than 0, and h is an integer greater than 0.

18. The method according to claim 17, wherein the time domain resources occupied by the i^{th} PDCCH in the plurality of PDCCHs overlapping with time domain resources occupied by the h^{th} PDSCH in the plurality of PDSCHs comprises at least one of:
a transmission mode of the plurality of PDCCHs being an intra-slot time division multiplexing (TDM) scheme, and a transmission mode of the plurality of PDSCHs being the intra-slot TDM scheme;
the transmission mode of the plurality of PDCCHs being the intra-slot TDM scheme, and the transmission mode of the plurality of PDSCHs being an inter-slot TDM scheme;
the transmission mode of the plurality of PDCCHs being the inter-slot TDM scheme, and the transmission mode of the plurality of PDSCHs being the inter-slot TDM scheme;
the transmission mode of the plurality of PDCCHs being a single frequency network (SFN) or a frequency division multiplexing (FDM) scheme, and the transmission mode of the plurality of PDSCHs being the SFN, a space division multiplexing (SDM) scheme or the FDM scheme; or
the transmission mode of the plurality of PDCCHs being the SFN or the FDM scheme, and the transmission mode of the plurality of PDSCHs being the TDM scheme.

19. The method according to claim 17 or 18, wherein determining the TCI state for sending the at least one PDSCH comprises:
the TCI state corresponding to the i^{th} PDCCH being used for the h^{th} PDSCH.

20. The method according to claim 19, wherein the M TCI states are identical with the N TCI states.

21. The method according to claim 20, wherein a value of N is 2, the plurality of PDSCHs comprise two PDSCHs, and an PDSCH other than the h^{th} PDSCH uses a TCI state different from the TCI state corresponding to the i^{th} PDCCH in the N TCI states.

22. The method according to claim 20, wherein a value of N is 2, and the plurality of PDSCHs comprise L PDSCHs, where L is an even number greater than 2;
the two TCI states for sending the L PDSCH is determined according to a mapping rule of the two TCI states; wherein the mapping rule of the two TCI states is a cyclic mapping or a sequential mapping.

23. The method according to claim 22, further comprising:
in case that the mapping rule of the N TCI states is the cyclic mapping, the TCI state corresponding to the i^{th} PDCCH being used for odd-numbered PDSCHs, and a TCI state different from the TCI state corresponding to the i^{th} PDCCH in the N TCI states being used for even-numbered PDSCHs, in case that h is an odd number; or
the TCI state corresponding to the i^{th} PDCCH being used for even-numbered PDSCHs, and the TCI state different from the TCI state corresponding to the i^{th} PDCCH in the N TCI states being used for odd-numbered PDSCHs, in case that h is an even number.

24. The method according to claim 22, further comprising:
in case that the mapping rule of the N TCI state is the sequential mapping, the TCI state corresponding to the i^{th} PDCCH being used for a (4j+1)^{th} PDSCH and a (4j+2)^{th} PDSCH, and a TCI state different from the TCI state corresponding to the ith PDCCH in the N TCI states being used for a (4j+3)^{th} PDSCH and a (4j+4)^{th} PDSCH, where j is an integer greater than or equal to 0; or
the TCI state corresponding to the i^{th} PDCCH being used for a first L/2 PDSCHs, and a TCI state different from the TCI state corresponding to the i^{th} PDCCH in the N TCI states being used for a last L/2 PDSCHs.

25. The method according to claim 19, wherein the M TCI states are not identical with the N TCI states.

26. The method according to claim 25, wherein a value of N is 2, the plurality of PDSCHs comprise two PDSCHs;
a first PDSCH uses a first TCI state in the N TCI states, and a second PDSCH uses a second TCI state in the N TCI states; or
the first PDSCH uses a second TCI state in the N TCI states, and the second PDSCH uses the first TCI state in the N TCI states.

27. The method according to claim 25, wherein a value of N is 2, and the plurality of PDSCHs comprise L PDSCHs, where L is an even number greater than 2;
the two TCI states for sending the L PDSCHs are determined according to a mapping rule of a cyclic mapping or a sequential mapping.

28. The method according to claim 27, further comprising:
a first TCI state in the N TCI states being used for odd-numbered PDSCHs, and a second TCI state in the N TCI states being used for even-numbered PDSCHs, according to the mapping rule of the cyclic mapping; wherein PDSCHs occupying time domain resources not overlapping with the time domain resources occupied by the first PDSCH remain unchanged or are postponed in sequence; or
a second TCI state in the N TCI states being used for odd-numbered PDSCHs, and a first TCI state in the N TCI states being used for even-numbered PDSCHs; wherein PDSCHs occupying the time domain resources not overlapping with the time domain resources occupied by the first PDSCH remain unchanged or are postponed in sequence.

29. The method according to claim 27, further comprising:
a first TCI state being used for a (4k+1)^{th} PDSCH and a (4k+2)^{th} PDSCH, and a second TCI state, according to the mapping rule of the sequential mapping being used for a (4k+3)^{th} PDSCH and a (4k+4)^{th} PDSCH, where k is an integer greater than or equal to 0; wherein PDSCHs occupying the time domain resources not overlapping with the time domain resources occupied by the first PDSCH remain unchanged or are postponed in sequence; or
the TCI state corresponding to the first PDCCH being used for a first L/2 PDSCHs, and a TCI state different from the TCI state corresponding to the second PDCCH in the N TCI states being used for a last L/2 PDSCHs; wherein PDSCHs occupying the time domain resources not overlapping with the time domain resources occupied by the first PDSCH remain unchanged or are postponed in sequence.

30. The method according to claim 16, wherein determining a TCI state for sending at least one PDSCH in case of time domain resources occupied by at least one PDCCH overlapping with time domain resources occupied by the at least one PDSCH comprises:
the terminal device not expecting that the time domain resources occupied by an s^{th} PDCCH and an (s+1)^{th} PDCCH in the plurality of PDCCHs overlap with the time domain resources occupied by one of the plurality of PDSCHs, where s is an integer greater than 0.

31. A communication apparatus, comprising:
a transceiver module configured to receive configuration information of a network device, wherein the configuration information comprises time domain information of a plurality of physical downlink control channels (PDCCHs) and M transmission configuration indicator (TCI) states for receiving the plurality of the PDCCHs, where M is an integer greater than 0; the configuration information further comprises time domain resource information of a plurality of physical downlink shared channels (PDSCHs) and N TCI states for receiving the plurality of PDSCHs, where N is an integer greater than 0;
a processing module configured to determine a TCI state for receiving at least one PDSCH in case of time domain resources occupied by at least one PDCCH overlapping with time domain resources occupied by the at least one PDSCH.

32. A communication apparatus, comprising:
a transceiver module configured to send configuration information of a terminal device, wherein the configuration information comprises time domain information of a plurality of physical downlink control channels (PDCCHs) and M transmission configuration indication (TCI) states for sending the plurality of PDCCHs, where M is an integer greater than 0; the configuration information also comprises time domain resource information of a plurality of physical downlink shared channels (PDSCHs) and N TCI states for sending the plurality of PDSCHs, where N is an integer greater than 0;
a processing module configured to determine a TCI state for sending at least one PDSCH in case of time domain resources occupied by at least one PDCCH overlapping with time domain resources occupied by the at least one PDSCH.

33. A communication device, comprising:
a processor; and
a memory storing a computer program;
wherein the processor executes the computer program stored in the memory, causes the device to execute the method according to any one of claims 1 to 15.

34. A communication device, comprising:
a processor; and
a memory storing a computer program;
wherein the processor executes the computer program stored in the memory, causes the device to execute the method according to any one of claims 16 to 30.

35. A communication device, comprising:
a processor; and
an interface circuit configured to receive code instructions and transmit the code instructions to the processor;
wherein the processor is configured to run the code instructions to perform the method according to any one of claims 1 to 15.

36. A communication device, comprising:
a processor; and
an interface circuit configured to receive code instructions and transmit the code instructions to the processor;
wherein the processor is configured to run the code instructions to perform the method according to any one of claims 16 to 30.

37. A computer-readable storage medium having stored therein instructions that, when executed, cause the method according to any one of claims 1 to 14 to be implemented.

38. A computer-readable storage medium having stored therein instructions that, when executed, cause the method according to any one of claims 16 to 30 to be implemented.
